# EUROPEAN PATENT SPECIFICATION

(11) **EP 0 337 346 B1**
(45) Date of publication and mention of the grant of the patent: **22.12.1993**
(21) Application number: 89106302.6
(22) Date of filing: 10.04.1989
(51) Int. Cl.: C08G 65/00, C08G 65/30

(54) **Crosslinked products having a perfluoropolyether structure**
Vernetzte Produkte mit Perfluoropolyetherstruktur
Produits réticulés ayant une structure de perfluoropolyéthyl

(30) Priority: 11.04.1988 IT 2015788
(43) Date of publication of application: 18.10.1989
(73) Proprietor: AUSIMONT S.p.A., I-20121 Milano (IT)
(72) Inventor: Marchionni, Giuseppe, I-20133 Milano (IT); Strepparola, Ezio, I-24047 Treviglio Bergamo (IT); Spataro, Gianfranco, I-20035 Lissone Milano (IT)
(74) Representative: Barz, Peter, Dr.

(56) References cited:
- EP-A- 0 244 839
- DE-A- 3 739 447
- US-A- 3 451 907
- US-A- 4 238 602
- PATENT ABSTRACTS OF JAPAN, vol. 11, no. 185 (C-428)(2632), 13th June 1987; & JP-A-62 010 135
- Encyclopedia of Polymer Science and Engineering, vol. 4, p. 350 ff. ("cross-linking"), John Wiley & Sons, 1986.

## Description

The present invention relates to crosslinked macromolecular products having a perfluoropolyether structure, wherein the crosslinking is effected by direct C-C bonds between carbon atoms belonging to different perfluoropolyether chains, said crosslinked products being furthermore provided with functional groups arranged along and at the ends of said chains. The functional groups in question are the groups of formula 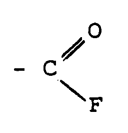
and, additonally, all those groups which can be obtained from the same by means of known chemical reactions, such as -COOH, -CONHR (R = H or an alkyl group, preferably having 1 to 12 and, particularly, 1 to 6 carbon atoms), -CN, -CHR′OH (wherein R′ = H, CH₃ or CF₃), -CH₂NH₂ and -SO₃H. Further functional groups can be obtained from the above-mentioned functional groups, for instance those described in US-A-3 810 874 and 3 847 978 and in EP-A-165 649 and 165 650.

The crosslinked products of the present invention are obtainable by subjecting to radiation of sufficient energy, such as U.V., electron beam radiation and the like, perfluoropolyethers having groups of the formula 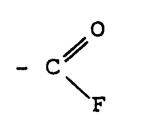
distributed along the chain and at one or at both ends thereof.

The -COF groups are eliminated under the action of said radiation, resulting in the formation of one -C-C- bond between carbon atoms of different chains per pair of -COF groups which has been removed. The latter are converted into volatile byproducts (CO + COF₂).

The starting perfluoropolyethers, which contain COF groups have one of the following structures:
(a) 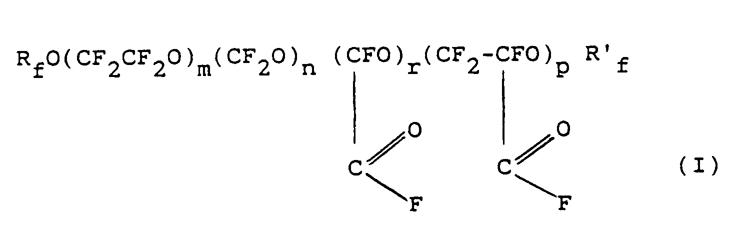 wherein R_{f} and R′_{f}, which may be the same or different, represent groups of the formulae 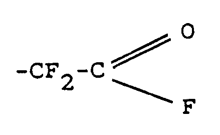 and 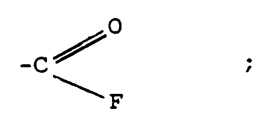 each of m and p is at least 1 (preferably m ≧ 1), the total number of COF groups in the molecule is at least 3, r is ≦ p and may be 0 and m/n is from 0.5 to 2, the average molecular weight of said polyether ranging from about 800 to about 15000;
(b) 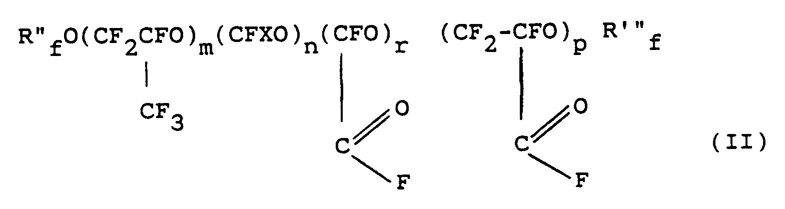 wherein X represents F or CF₃, R˝_{F} and R‴_{F}, which may be the same or different, may be perfluoroalkyl groups having from 1 to 3 carbon atoms or groups of the formulae 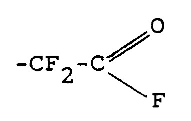 and 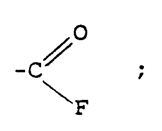 the m/n ratio ranges from 5 to 40, p is ≧ 1 and r is ≦ p and may be O, provided that the molecule contains at least three 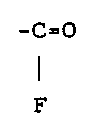 groups, the average molecular weight of said polyether ranging from about 800 to about 8000.

By applying the method described in EP-A-244 839 to a starting mixture consisting of C₂F₄, C₃F₆ and hexafluorobutadiene and by using the same working conditions in the photochemical oxidation, in the decomposition of the peroxide groups and in the conversion of epoxy groups into COF groups, a product may be obtained which contains a mixture of the different perfluorooxyalkylene units of the above formulae (I) and (II) and which can be represented by the following general formula (III): 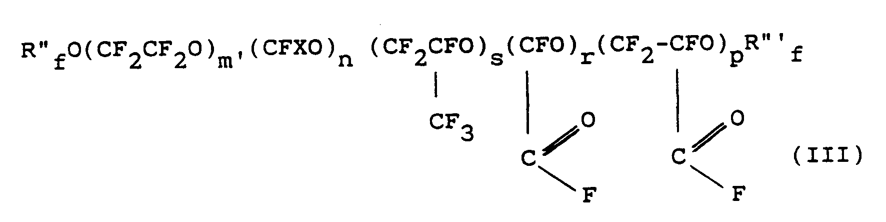
wherein the end groups R˝_{f} and R‴_{f} have the same meaning as in formula (II), n, p and r are as defined for formula (II), and (m′+s) corresponds to m in formula (II) and satisfies the corresponding requirement.

In the above formulae the perfluorooxyalkylene units are situated with a random distribution in the perfluoropolyether chain.

The above-mentioned starting perfluoropolyethers may be prepared by following the procedures described in EP-A-244 839 in the name of applicant. In said document in particular the preparation of the corresponding perfluoropolyethers containing epoxy groups of the formula 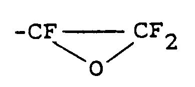
along the perfluoropolyether chain and the conversion of said epoxy groups into 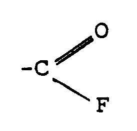
groups by by a thermal treatment at 180 to 200°C are disclosed.

A simplified method comprises the direct subjecting of the product of the photooxidation to a thermal treatment at 180 to 200°C, which results in concommitant decomposition of the peroxide groups and conversion of the epoxy groups into 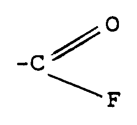
groups.

Some information in this respect can also be taken from US-A-3 451 907 in the name of applicant.

The crosslinking is achieved by exposing the perfluoropolyether mixture to radiation of relatively high energy, such as U.V., electron beam radiation and the like.

The crosslinking may easily be controlled by varying the intensity and time of irradiation and the oil concentration.

Consequently, a larger of smaller portion of the -COF groups present may be removed under formation of crosslinks. Therefore, the obtained product can be crosslinked to a lesser or higher degree and can possess a larger or smaller number of COF groups which have not been consumed in the crosslinking process and may be converted into various functional groups by means of known reactions.

According to the procedure described in EP-A-244 839, the starting materials may be obtained with a predetermined molecular weight with values ranging within wide limits and with a number of epoxy groups along the chain, said number being variable at will.

Thus, by carrying out a controlled crosslinking according to the present invention, a wide range of products can be obtained, having a predetermined and variable degree of crosslinking and containing a predetermined number of residual functional COF groups.

Whereas the starting perfluoropolyethers are liquid products which have a more or less high viscosity, depending on their molecular weight, and are soluble in chlorofluorocarbon solvents, the macromolecular products according to the present invention, showing a certain degree of crosslinking, are products having a waxy appearance, are insoluble in solvents, non-mouldable and only susceptible to swelling in solvents, depending on their degree of crosslinking.

The products having a low degree of crosslinking are susceptible to swelling in solvents.

The products according to the present invention, due to their perfluoropolyether structure, have a very low Tg of the order of -100 to -120°C.

The crosslinked products according to the present invention can be obtained with a high content of functional -COOH groups and, in this case, they can act very well as ion exchange resins for fixing metal cations.

They can further be provided with basic functional groups and then act as anion exchange resins. Due to their high chemical inertness, said products can be used to particular advantage as catalyst carriers containing, as active component from a catalytic point of view, particular functional groups (for instance acid groups) or metal cations fixed through ion exchange.

Their use in the form of a membrane for ion exhange in electrolytic processes is of particular interest.

The products of the invention can also be employed as polymeric coatings on metals and/or polymeric, ceramic materials and the like. Due to the specific functional groups present, high adhesion to the substrate can be achieved. Coating can be carried out in a simple manner by applying the starting liquid perfluoropolyethers onto the substrate and then subjecting them to irradiation in order to effect crosslinking, followed by chemical changes in the functional groups.

The following examples serve to illustrate the invention.

### EXAMPLE 1

A 300 ml photochemical reactor having an optical path of 0.5 cm, equipped with a reflux condenser kept at -80°C and a sheath with thermocouple for measuring the temperature was employed. The reactor was equipped with a system of quartz sheaths cooled by means of FC 75^{(R)} for connection to an U.V. lamp (HANAU TYPE TW 150, the wavelength ranging from 248 to 800 nm).

200 ml of CF₂Cl₂ were placed into the reactor after having been cooled by means of a dry/ice acetone bath. Then, 20 l/h of O₂, 3.5 l/h of C₂F₄ and C₄F₆ were introduced over a period of 4.3 hours, the temperature of the reactor being kept at -40°C. (The gases introduced were first passed through a CaCl₂ trap). At the end of said period, the solvent was evaporated and 96 g of an oil were obtained. Said oil had a content of active (peroxide) oxygen of 1.8% by weight. In view thereof and based on the ¹⁹F-NMR and IR spectra, the structure of said product can be represented by a sequence of the units -CF₂O-, -CF₂CF₂O-, -CF₂O-O-, -CF₂CF₂O-O-, 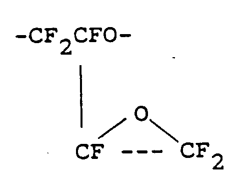
and 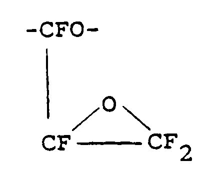
The product had a viscosity of 165 cSt at 20°C and an average molecular weight (determined by GPC and confirmed by NMR) of 1810. The epoxy content was 4.7 units per polymer chain.

### EXAMPLE 2

The oil obtained in example 1, having a peroxide strength (P.O.) of 1.8% by weight, was subjected to a thermal treatment in order to reduce its oxidizing power. 96 g of polymer were placed into a 100 ml flask equipped with a thermometer and a stirrer. The temperature was brought to 200°C within 3.5 hours and kept at this value for a further 2 hours. At the end, 70.2 g of a product were discharged, which, according to iodometric analysis, showed a P.O. of zero. The ¹⁹F-NMR spectrum did not reveal the presence of epoxy groups. Instead, peaks appeared which were characteristic of the groups 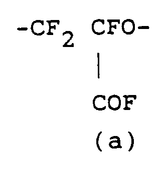
and 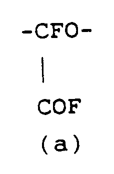
(δ (a) = + 26.4)
The product showed an average molecular weight of 1290. According to acidimetric analysis it had an equivalent weight, based on the number of COF groups, of 259.

### EXAMPLE 3

The apparatus used in example 1 was employed, except that the optical path was 0.2 cm. The U.V. lamp was of the type HANAU TQ 150 (wavelength ranging from 248 to 800 nm).

1.4 g of product obtained as described in example 2 and 60 g of perfluoroheptane were placed into the reactor. Then the reactor was cooled to -40°C and the reaction mixture was irradiated for a total time of 2.5 hours. A progressive turpidness of the reaction mixture could be observed. At the end of this period, the lamp was switched off, the solvent was evaporated and 1.2 g of a product having a waxy, white appearance, which was capable of swelling only in fluorochlorinated solvents and, after hydrolysis, swelled in water and acetone, were isolated.

The I.R. spectrum still showed -COF bands (1884 cm⁻¹) Based on acidimetric analysis, the equivalent weight, relating to the number of -COF groups, was 558. The product showed a Tg of -115°C.

### EXAMPLE 4

The procedure of example 1 was followed, employing a 600 ml reactor having an optical path of 1 cm, using 400 ml of CF₂Cl₂ and introducing 46.6 l/h of O₂, 7.5 l/h of C₂F₄ and 2.8 l/h of C₄F₆, at a temperature of -40°C for a total time of 5 hours.

Subsequently, the solvent was evaporated and 200 g of an oil were recovered. Said oil had a peroxide oxygen content of 3.2% by weight. On the basis of the ¹⁹F-NMR data, the structure of this product may be represented by a sequence of the units -CF₂O-, -CF₂CF₂O-, -CF₂O-O, -CF₂CF₂O-O, 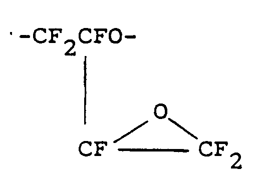
and 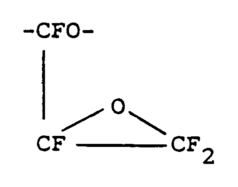
with end groups of the type OCOF (90%) and CF₂COF (10%). The product had a viscosity of 200 cSt at 20°C and a molecular weight of 5000, determined by means of a vapour pressure osmometer (V.P.O.).

The content in epoxy groups was 10.8 groups per polymeric chain. Based on acidimetric analysis, the equivalent weight, relating to the number of COF groups, was 1000. The number of peroxide units per chain was 10.

### EXAMPLE 5

The product obtained in example 4 (P.O. = 3.2%) was subjected to a thermal treatment.

200 g of the polymer were placed into a 250 ml flask, equipped with a thermometer and a stirrer. The temperature was increased to 220°C over a period of 8 hours and kept at this value for a further 4 hours. At the end, 132 g of a product were discharged which had a P.O. value of zero, based on iodometric analysis. The ¹⁹F-NMR spectrum indicated a structure of the type: 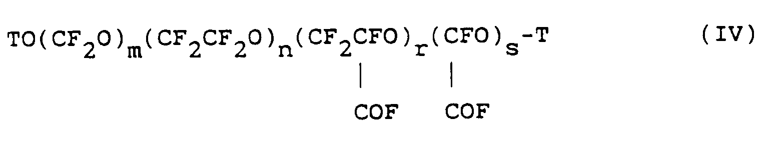
wherein T = CF₂COF. The molecular weight was 1750, determined by means of V.P.O. According to the acidimetric analysis, the equivalent weight, based on COF groups, was 260, corresponding to 6.7 COF groups per polymer chain. In the above formula (r+s) equals 4.7.

Moreover, from the NMR spectrum it could be determined that r/r+s = 0.9 and m/n = 0.8; general formula (IV) must, thus, be concluded to have the following indices: m = 5.54, n = 6.92, r = 4.23 and s = 0.47.

### EXAMPLE 6

A 300 ml photochemical reactor having an optical path of 0.5 cm, equipped with a reflux condenser kept at -80°C and a sheath with thermocouple for measuring the temperature was employed. The reactor was equipped with quartz sheaths cooled by means of Galden DO2^{(R)} for connection to the U.V. lamp (type HANAU TQ 150; wavelength ranging from 200 to 800 nm). 56 g of product of example 5 and 250 ml of Galden D80^{(R)} were placed into the reactor. The sheath containing the lamp was cooled, keeping the reactor temperature at about 20°C, and the reaction mixture was irradiated for a total of 8 hours.

At the end of said period the lamp was switched off, the solvent (Galden^{(R)}) was evaporated and 53.2 g of a product were recovered which was very viscous and, after hydrolysis, was soluble in water. According to acidimetric analysis, the equivalent weight, based on the number of COF groups, was 277. Consequently only 6% of the COF end groups had been converted. In view thereof it can be concluded that the product had a structure of the type: 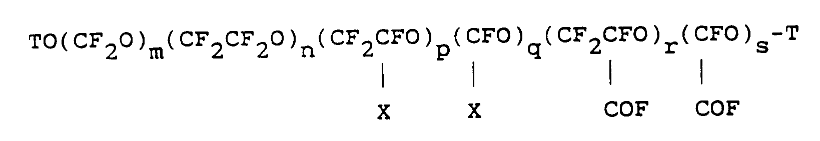
wherein X represents an interchain link and T is -CF₂COF. m, n, p, q, r and s had the following values: m = 5.54; n = 6.92; r = 3.66; s = 0.4; p = 0.23; q = 0.03.

### EXAMPLE 7

The procedure of example 6 was repeated with an oil concentration of 2.5 g/1 with respect to the solvent used.

After 4 hours of reaction, 6.65 g of a product were recovered which product had a waxy, white appearance and was only able to swell in fluorochlorinated solvents. After hydrolysis it was only able to swell in water and acetone. Based on acidimetric titration, the equivalent weight, with respect to the number of COF groups, was 850. Consequently, 25% of the end groups had reacted.

In this case, a polymeric structure of the following type can be concluded: 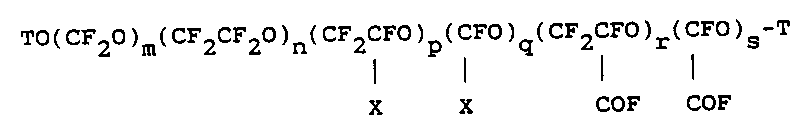
wherein X represents an interchain link and T is an end group CF₂COF. Consequently, the indices had the following values: m = 5.54; n = 6.92; r = 2.7; s = 0.3; p = 1.5; q = 0.2.

### EXAMPLE 8

99 g of perfluoro-1,3-butadiene and 297 g of hexafluoropropene were reacted at -40°C for 3 hours and 45 minutes with a continuous feed of a total of 35.2 g of oxygen in a 0.25 l glass reactor, equipped with an U.V. lamp (high pressure mercury-vapour lamp, type HANAU TQ 150) with draft pipes for introducing the gaseous reagents and drawing samples.

After degassing at room temperature and under vacuum, 195 g of an oil having a viscosity of 800 cSt at 20°C and a content of peroxidic groups equal to 0.9% by weight of active oxygen (according to iodometric analysis) were obtained.

The average molecular weight, determined by VPO, was 3310. Based on acidimetric analysis, the equivalent weight, based on the number of COF groups, was 1000. On average, 3.8 epoxy groups per molecule were present.

Therefore, the product had a structure represented by the following formula: 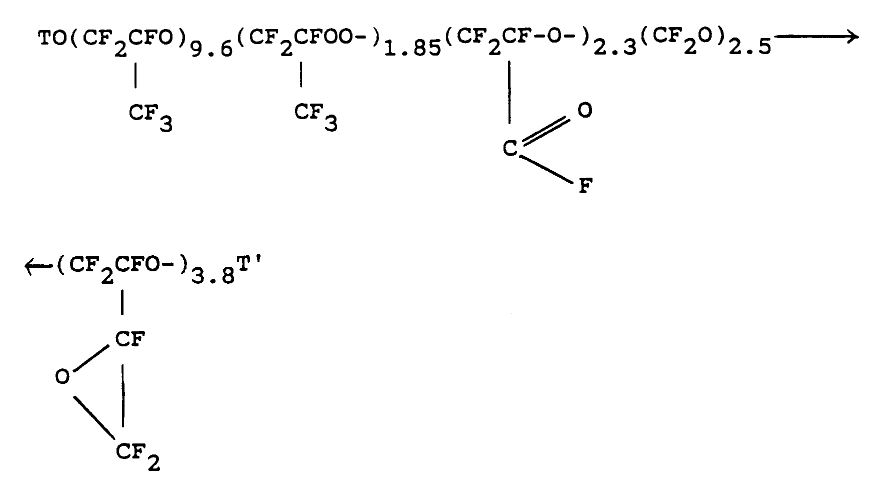
wherein T = CF₃ and T′= CF₂COF.

By thermal treatment at 200 to 250°C for 8 hours, complete conversion of the epoxy groups into 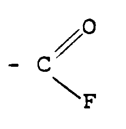
groups was effected.

The product thus obtained had a molecular weight of 2416 and an equivalent weight, with respect to COF, of 443, which corresponded to an average of 5.45 COF groups per molecule.

1.7 g of product obtained after thermal treatment and 65 ml of perfluoroheptane were introduced into a 100 ml photochemical reactor having an optical path of 0.2 cm, equipped with a cooler, as described in example 3. The reactor was cooled to -40°C and the reaction zone was irradiated for a total time of 2.5 hours.

The lamp was switched off. A slurry was discharged which, after evaporation of the solvent under vacuum, left a product having a waxy, white appearance.

The solubility tests for the products as such were negative in chlorofluorocarbon solvents. After hydrolytic treatment in water, the product swelled only slightly in water and in acetone. The same is true for the corresponding sodium, ammonium and potassium salts.

In the I.R. spectrum, the product displayed COF bands. The acidimetric titration showed an equivalent weight, based on the number of COF groups, of 1015, the percentage of disappeared COF groups being 56%.

### EXAMPLE 9

A polymer obtained by following the procedure of example 7 was hydrolyzed with water at 60°C, filtered and dried at room temperature. Said polymer, according to potentiometric titration, had an equivalent weight of 740. 57.6 mg of the polymer thus obtained were left to stand overnight, at room temperature, in 15 ml of 0.5 m aqueous NaCl solution until equilibrium was reached.

The swollen solid was then separated by filtration over a Nucleopore^{(R)} filter (pore size 0.22 µm) and the liquid phase, containing the hydrogen ions originating from the -COOH groups after the exchange with the Na⁺ ions, was added to 6.52 ml of 0.01 m aqueous NaOH solution. The excess of OH⁻ ions was then titrated with a 0.01 m aqueous HNO₃ solution.

The ion exchange efficiency of the polymer (i.e. the percentage of NaCl withdrawn from the solution) was 66%.

Under the same exchange conditions the ion exchange efficiency of NAFION^{(R)} (a sulphonic ion exchange membrane, manufactured by DuPont, equivalent weight 1,100) was 73%.

### EXAMPLE 10

A polymer prepared as described in example 6 was hydrolyzed with water at 60°C, filtred and dried at room temperature. The polymer had an equivalent weight of 350. 88.1 mg of the polymer thus obtained were treated with 20 ml of the same NaCl solution as in example 9, under the same conditions.

After filtration the liquid phase containing the hydrogen ions was titrated with 0.1 m aqueous KOH solution.

The efficiency of the polymer was 52%. The atomic absorption spectroscopy of the polymer confirmed said value.

### EXAMPLE 11

69.4 mg of the hydrolyzed polymer used in example 9 were treated with 15 ml of a 0.5 m aqueous KCl solution under the conditions described in example 9.

The ion exchange efficiency of the polymer turned out to be 68%.

The efficiency of NAFION^{(R)} in this case was 75%.

### EXAMPLE 12

0.5 g of the hydrolyzed polymer of example 9 was added to a solution of 0.3 g of an amine of the formula
H₂N-CH₂-CF₂O(CF₂CF₂O)₁₀(CF₂O)₁₀CF₂CH₂NH₂
in 10 ml of 1,1,2-trichloro-1,2,2-trifluoroethane.

After two hours of stirring, no amine could be detected in the solution.

The polymer was separated and dried. The F.T.I.R. spectrum showed the typical absorption band of -COO⁻ at 1672 cm⁻¹ along with the absorption band of the free acid group at 1778 cm⁻¹.

## Claims

1. Crosslinked macromolecular products having a perfluoropolyether structure, wherein the crosslinking is due to direct C-C bonds between carbon atoms of different perfluoropolyether chains and wherein functional groups are situated along said perfluoropolyether chains and at one or both ends of said chains, said crosslinked products being obtainable by irradiation of perfluoropolyethers containing at least three groups of the formula 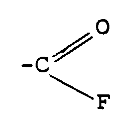 arranged along the perfluoropolyether chain and at one or both ends of said chain, said perfluoropolyethers being selected from the following classes:
(a) Perfluoropolyethers of general formula (I): 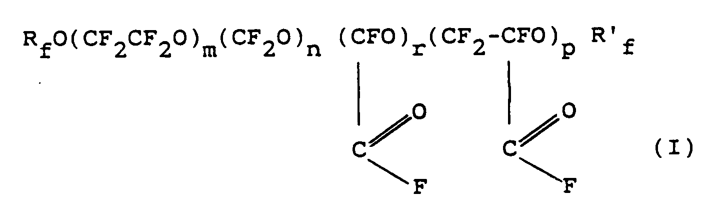 wherein R_{f} and R′_{f}, which may be the same or different, represent groups of the formulae 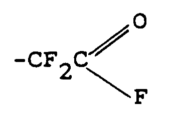 and 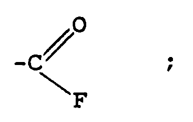 each of m and p is at least 1, the total number of COF groups in the molecule is at least 3, r is ≦ p and may be O and m/n ranges from 0.5 to 2, the average molecular weight of said perfluoropolyethers ranging from about 800 to about 15000;
(b) Perfluoropolyethers of general formula (II): 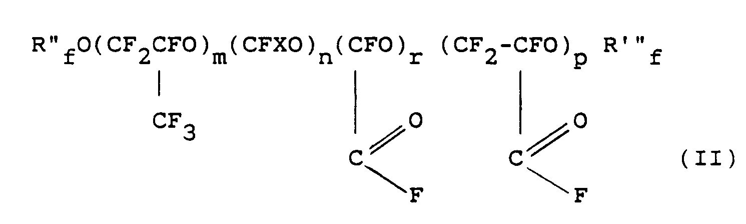 wherein X represents F or CF₃; R˝_{f} or R‴_{f}, which may be the same or different, are perfluoroalkyl groups having 1 to 3 carbon atoms or are groups of the formulae 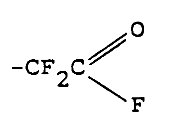 and 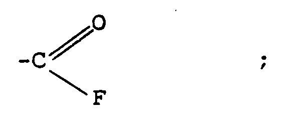 the m/n ratio ranges from 5 to 40, p is ≧ 1 and r is ≦ p and may be O, provided that at least three -COF groups are present, the average molecular weight of said perfluoropolyethers ranging from about 800 to about 8000;
(c) Perfluoropolyethers of general formula (III): 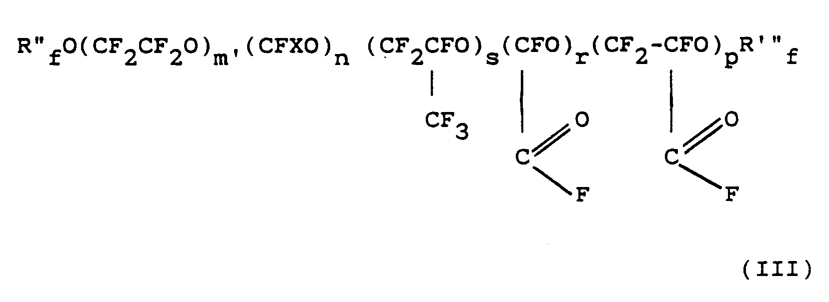 wherein the end groups R''_{f} and R'''_{f} have the same meanings as defined for formula (II), n, p and r are as defined for formula (II), whereas (m'+s) satisfies the requirement given for m in formula (II).

2. Products according to claim 1, wherein the functional groups are selected from 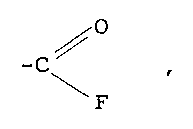 -COOH, -CONHR (wherein R is H or an alkyl group), -CN, -CHR'OH (wherein R' is H, CF₃ or CH₃), -CH₂NH₂ and -SO₃H.

3. Process for preparing the products of any one of claims 1 and 2, comprising the following steps:
(a) Photooxidation of mixtures of perfluorobutadiene and tetrafluoroethylene and/or perfluoropropene;
(b) Thermal treatment of the product of said photooxidation, thereby eliminating the peroxide groups and converting the epoxy groups of the formula 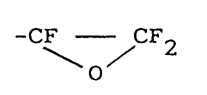 into COF groups;
(c) Exposing the product obtained in step (b) to radiation of high energy such as UV or electron beam radiation, resulting in the partial removal of the groups of formula 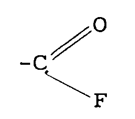 and formation of C-C bonds between carbon atoms belonging to different chains.

4. Use of the products of any one of claims 1 and 2 as ion exchange resins.

## Patentansprüche

1. Vernetzte makromolekulare Produkte mit einer Perfluorpolyether-Struktur, in welchen die Vernetzung auf direkte C-C-Bindungen zwischen Kohlenstoffatomen von unterschiedlichen Perfluorpolyether-Ketten zurückgeht und in welchen sich funktionelle Gruppe entlang dieser Perfluorpolyether-Ketten und an einem oder beiden Enden dieser Ketten befinden, wobei die vernetzten Produkte erhältlich sind durch Bestrahlung von Perfluorpolyethern, die mindestens drei Gruppen der Formel 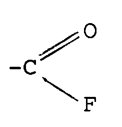 die entlang der Perfluorpolyether-Kette und an einem oder beiden Enden dieser Kette angeordnet sind, enthalten, wobei die Perfluorpolyether aus den folgenden Klassen ausgewählt sind:
(a) Perfluorpolyether der allgemeinen Formel (I): 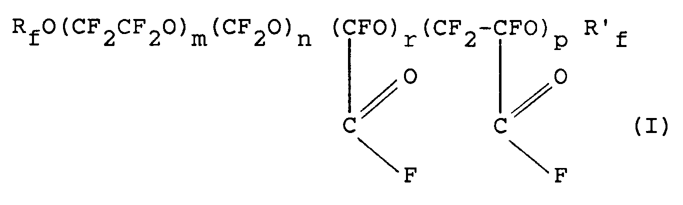 worin R_{f} und R'_{f}, die gleich oder verschieden sein können, Gruppen der Formeln 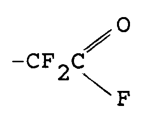 und 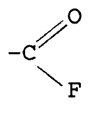 darstellen; sowohl m als auch p mindestens 1 ist, die Gesamtzahl der COF-Gruppen im Molekül mindestens 3 ist, r ≦ p ist und 0 sein kann und m/n im Bereich von 0,5 bis 2 liegt, wobei das durchschnittliche Molekulargewicht der Perfluorpolyether im Bereich von etwa 800 bis etwa 15000 liegt;
(b) Perfluorpolyether der allgemeinen Formel (II): 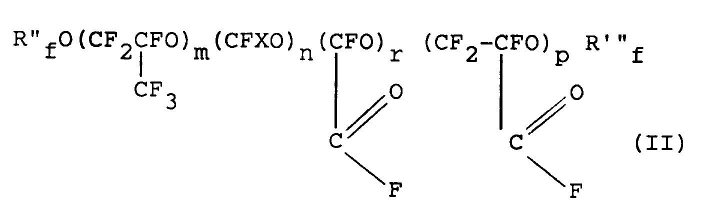 worin X für F oder CF₃ steht; R''_{f} oder R'''_{f}, die gleich oder verschieden sein können, Perfluoralkylgruppen mit 1 bis 3 Kohlenstoffatomen darstellen oder Gruppen der Formeln 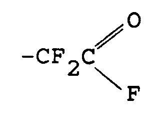 und 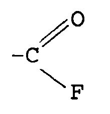 sind; das Verhältnis m/n im Bereich von 5 bis 40 liegt, p ≧ 1 ist und r ≦ p ist und 0 sein kann, mit der Maßgabe, daß wenigstens drei -COF-Gruppen vorhanden sind, wobei das durchschnittliche Molekulargewicht der Perfluorpolyether im Bereich von etwa 800 bis etwa 8000 liegt;
(c) Perfluorpolyether der allgemeinen Formel (III): 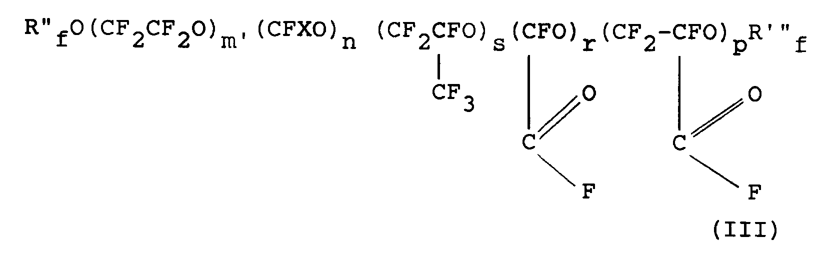 worin die Endgruppen R''_{f} und R'''_{f} dieselben Bedeutungen wie für Formel (II) definiert aufweisen, n, p und r wie für Formel (II) definiert sind, während (m'+s) der für m in Formel (II) angegebenen Anforderung genügt.

2. Produkte nach Anspruch 1, in welchen die funktionellen Gruppen ausgewählt sind aus 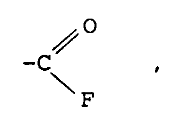 -COOH, -CONHR (worin R für H oder eine Alkylgruppe steht), -CN, -CHR'OH (worin R' für H, CF₃ oder CH₃ steht), -CH₂NH₂ und -SO₃H.

3. Verfahren zur Herstellung der Produkte von irgendeinem der Ansprüche 1 und 2, umfassend die folgenden Stufen:
(a) Photooxidation von Mischungen von Perfluorbutadien und Tetrafluorethylen und/oder Perfluorpropen;
(b) thermische Behandlung des Produkts dieser Photooxidation, wodurch die Peroxidgruppen eliminiert und die Epoxygruppen der Formel 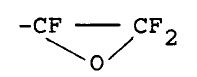 in COF-Gruppen umgewandelt werden;
(c) Bestrahlen des in Stufe (b) erhaltenen Produkts mit Strahlung hoher Energie, wie z.B. UV- oder Elektronenstrahl-Strahlung, was in der teilweisen Entfernung der Gruppen der Formel 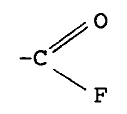 und der Bildung von C-C-Bindungen zwischen Kohlenstoffatomen, die zu unterschiedlichen Ketten gehören, resultiert.

4. Verwendung der Produkte von irgendeinem der Ansprüche 1 und 2 als Ionenaustauscherharze.

## Revendications

1. Produits macromoléculaires réticulés présentant une structure de perfluoropolyéther dans lesquels la réticulation est effective à des liaisons carbone-carbone directes entre les atomes de carbone des différentes chaînes de perfluoropolyéther et dans lesquels les groupes fonctionnels sont situés le long desdites chaînes de perfluoropolyéthers et à l'une ou aux deux extrémités desdites chaînes, lesdits produits réticulés pouvant être obtenus par irradiation des perfluoropolyéthers contenant au moins trois groupes représentés par la formule: 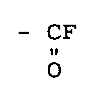 disposés le long de la chaîne de perfluoropolyéther et à l'une ou aux deux extrémités de ladite chaîne, lesdits perfluoropolyéthers étant sélectionnés parmi les groupes suivants:
(a) perfluoropolyéthers de formule générale (I): 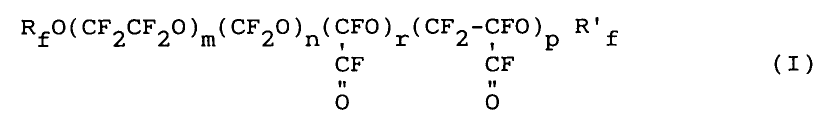 dans laquelle:
Rᵣ et R'_{f} qui peuvent être identiques ou différents, représentent des groupes de formule: 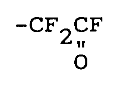 et 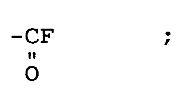
m et p étant au moins égal à 1,
le nombre total des groupes COF dans la molécule étant d'au moins 3,
r est inférieur ou égal à p et peut être 0, et
m/n est compris entre 0,5 et 2,
le poids moléculaire moyen desdits perfluoropolyéthers étant compris entre environ 800 et environ 15 000;
(b) perfluoropolyéthers de formule générale (II): 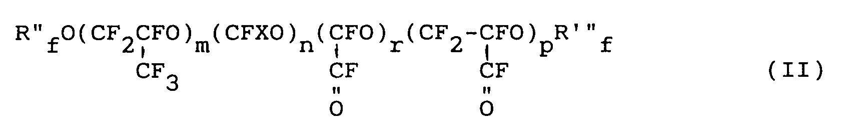 dans laquelle:
X représente F ou CF₃,
R''_{f} ou R'''_{f} qui peuvent être identiques ou différents, représentent des groupes perfluoroalkyles comportant de 1 à 3 atomes de carbone ou représentés par la formule: 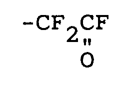 et 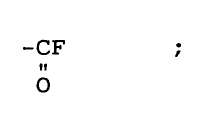
m/n est compris entre 5 et 40,
p est supérieur ou égal à 1, et
r est inférieur ou égal à p et peut être 0, à condition qu'au moins trois groupes -COF soient présents,
le poids moléculaire moyen desdits perfluoropolyéthers étant compris entre environ 800 et environ 8000.
(c) perfluoropolyéthers de formule générale (III): 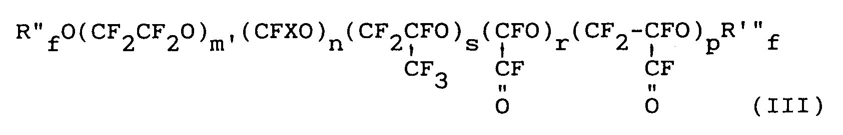 dans laquelle:
les groupes terminaux R''_{f} et R'''_{f} sont tels que définis pour la formule (II) ci-dessus,
n, p et r sont tels que définis dans la formule (II), tandis que
(m'+s) satisfait aux exigences décrites pour m dans la formule (II).

2. Produits selon la revendication 1, caractérisés en ce que les groupes fonctionnels sont sélectionnés parmi: 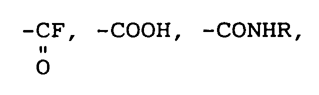 (dans lesquels R représente H ou un radical alkyle), -CN, -CHR'OH (dans lequel R' représente H, CF₃ ou CH₃), -CH₂N₂ et -SO₃H.

3. Procédé de préparation des produits selon l'une quelconque des revendications 1 et 2, comprenant les étapes suivantes:
(a) photooxydation des mélanges de perfluorobutadiène et tétrafluoroéthylène et/ou perfluoropropène;
(b) traitement thermique des produits de ladite photooxydation pour éliminer les groupes peroxydes et convertir les groupes époxy de formule 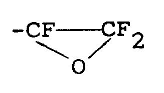 en des groupes COF;
(c) exposition du produit obtenu dans l'étape (b) à une radiation de haute énergie telle que une radiation UV ou une radiation de faisceaux d'électrons, ce qui conduit à l'élimination partielle des groupes de formule: 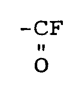 et à la formation de liaisons C-C entre les atomes de carbone appartenant des différentes chaînes.

4. Utilisation des produits selon l'une quelconque des revendications 1 et 2, en tant que résines échangeuses d'ion.
